# EUROPEAN PATENT SPECIFICATION

(11) **EP 4 393 679 B1**
(45) Date of publication and mention of the grant of the patent: **05.08.2026**
(21) Application number: 22217301.5
(22) Date of filing: 30.12.2022
(51) Int. Cl.: B29C 64/118, B29C 64/209, B33Y 30/00, B29C 64/194, B28B 1/00

(54) **HEAD ASSEMBLY WITH A PRESSING ELEMENT FOR AN ADDITIVE MANUFACTURING DEVICE**
KOPFANORDNUNG MIT EINEM PRESSELEMENT FÜR EINE VORRICHTUNG ZUR GENERATIVEN FERTIGUNG
ENSEMBLE TÊTE DOTÉ D'UN ÉLÉMENT DE PRESSION POUR UN DISPOSITIF DE FABRICATION ADDITIVE

(43) Date of publication of application: 03.07.2024
(73) Proprietor: PPHU Poligraf Wieslaw Kasprowiak, 66-400 Gorzów Wielkopolski (PL)
(72) Inventor: Kasprowiak, Wieslaw, 66-415 Santocko (PL)
(74) Representative: JWP Patent & Trademark Attorneys

(56) References cited:
- EP-B1- 3 507 073
- WO-A1-2022/029803
- AU-A1- 2021 205 076
- CN-B- 111 086 212
- US-A1- 2019 193 328

## Description

### Technical field

The present invention relates to a head assembly with a pressing element for an additive manufacturing device.

More specifically, the present invention relates to a head with a pressing element adapted to increase the adhesion of layers and to strengthen as well as even the manufactured structure.

### Background Art

The technology of prototyping/constructing workpieces by means of additive techniques, e.g. in the FFF/FDM technology or, as in the present case, by direct extrusion (a material in the form of a granulate is fed by means of a plasticizing system (a screw and a cylinder)). Starting from a granulate feeding zone, where the material is not yet plasticized, and moving through subsequent heated zones, where the material begins to plasticize and compress, the material reaches its outlet at the end of an extruding head, where a nozzle is located.

During the manufacturing of workpieces with additive techniques - especially during spatial printing (the so-called 3D printing) using, e.g., the direct extrusion method (Direct Pellet Extrusion), at high printing speeds, the layers of a molten plastic material applied on top of each other are not able to return the heat energy accumulated therein to the environment, which causes, e.g., a significant change in the geometry of the manufactured workpiece (deformation), and consequently leads to an irreversible interruption of the manufacturing process.

Another technical problem known in the background art that is encountered during additive manufacturing is the deposition of the material on a nozzle of the printing head as a result of, among others, unevenness of the layer or an excessive amount of the fed material. The material deposited on the nozzle of the printing head agglomerates, which in turn leads to the deposition of the agglomerate on the manufactured workpiece. After cooling down, the agglomerate can block the free passage of the printing head. This also affects the visual quality of the manufactured workpiece.

Additive manufacturing, compared to, e.g., the manufacturing of workpieces by injection (thermoforming), is characterized by reduced mechanical strength. Often, as experience shows, as a result of, for example, weak adhesion between the layers, a so-called delamination, i.e. separation of layers in the material, occurs.

### Known solutions

With the development of the additive methods, a problem related to the necessity to even and cool the applied layers has appeared. Cooling can be implemented by two main methods - by blowing air or spraying a coolant, or pressing the currently cooled element.

The first of these methods is known, among others, from patent document US7011783 B2. Disclosed therein is the use of a trolley on which an air duct blowing cooled gas is arranged. A roller pressing the applied layers of a material, the purpose of which is to even the applied layers, is arranged on the same trolley. Cooling by blowing gas is also known from patent document no. US8936742 B2 which discloses cooling nozzles evenly distributed on a ring around a material-distributing nozzle.

Another known solution has been disclosed in patent document US20668533 B2. This application proposes a solution that consists in applying a coolant onto a layer of a material by a dispenser. A solution is also known that enables cooling an additive manufacturing zone by cooling the chambers located around a material-distributing nozzle with fluid or gas. This solution is disclosed in US7326377 B2. A solution is known from US11207824 B2 that consists in the use of a roller pressing the applied material as well as a separate workpiece cooling system.

A solution is known from US11305487B2 that consists in the arrangement of a material-evening roller on a trolley with a heat source and a distributing nozzle. This roller may be additionally cooled internally by gas or fluid circulation. Patents US10105894B1, EP3507073B1, US9969122B1 are known that disclose the utilization of a pressing roller that follows the head of a filament-feeding nozzle. Patent US10632683B2, in turn, extends these solutions by internal cooling of the pressing roller by ducts filled with a circulating cooled fluid or gas. This solution provides a compact solution to the problem of pressure, evening and cooling of the surfaces manufactured by the additive methods. The described solutions relate to a roller pressing the applied layer of a material during additive manufacturing. An important disadvantage of this solution is the rotation of the roller around one axis of rotation, which significantly hinders the functioning of such an element in the case of additive manufacturing implemented in 4 or 5 axes. Moreover, in these solutions, it is not possible to reinforce the applied layer of a material or strengthen the manufactured workpiece.

### Summary of Invention

The present invention is defined in the independent claim. The dependent claims define embodiments thereof.

### Technical Problem

The present invention solves the problem of providing a head assembly with a pressing element maintaining a minimum contact surface of the pressing element with an applied layer of a semi-liquid material, which head assembly is thus adapted for additive manufacturing in at least 3 degrees of freedom. Additive manufacturing in at least 3 degrees of freedom should be understood as applying the layers not only onto a plane, but also onto a convex or concave surface. Additionally, the present invention provides strengthening of the applied layer with a reinforcement. The invention further provides cooling of the pressing element, enabling heat transfer between the applied material and the pressing element.

### Solution to Problem

According to the present invention, the head assembly includes a pressing element in the form of a ball that follows the extruded path. This movement is implemented thanks to a turntable which has the ability to rotate 360° about the axis of an extruder, also called a plasticizing system, which is driven by a servo drive, and the angle of rotation of the turntable is correlated with the correspondingly calculated angle of rotation of the axis of the extruder displacement path, which is identical with the change in the angle of the constructed/extruded polymer path. In other words, the ball always follows the extruded path.

The head assembly with the pressing element for an additive manufacturing device includes a material-feeding nozzle and a turntable mounted movably around the nozzle, wherein the rotating pressing element is connected to the turntable which is rotated by means of a servo drive. The material-feeding nozzle is configured to deposit a semi-plastic or semi-liquid material onto the working surface of the additive manufacturing device. The head assembly with the pressing element is characterized in that the pressing element is a ball arranged in a ball seat providing free rotation of the ball about any axis of rotation, wherein the ball seat is connected to the turntable. Thanks to the use of a ball as the pressing element, and at the same time thanks to maintaining the minimum contact surface of the pressing element with the applied layer of the semi-liquid material, additive manufacturing in at least 3 degrees of freedom is possible. The size of the ball depends on the particular application and the width of the applied path. Preferably, the diameter of the ball is in the range of 5 - 100 mm.

It is preferable that the ball is made of a material having good heat conduction, preferably of a metal, more preferably of copper, silver, steel, aluminum, or preferably of a metal alloy, more preferably of cast iron, brass, bronze.

It is preferable that the ball seat includes a heat-conducting flange. In order to efficiently receive heat energy from the applied material, the ball is arranged in a metal heat-conducting flange, preferably in a copper flange, which in turn is actively cooled with a liquid by means of a so-called "chiller" or cooler.

It is preferable that the head assembly includes at least one liquid cooler connected by conduits to a flange chamber in the heat-conducting flange. The heat conducting-flange is cooled with a liquid, wherein the liquid is delivered into the flange chamber and received from the flange chamber by conduits which connect the heat-conducting flange and the least one liquid cooler.

It is preferable that the head assembly includes at least one liquid heater connected by conduits to the flange chamber in the heat-conducting flange. The heat-conducting flange is heated with a liquid, wherein the liquid is delivered into the flange chamber and received from the flange chamber by conduits which connect the heat-conducting flange and the at least one liquid heater.

It is preferable that the liquid cooling or heating the heat-conducting flange is air, water, glycol, or a refrigerant, such as R134a or R404a.

Additionally, the workpiece manufactured/prototyped with the additive techniques is strengthened by a reinforcement. The reinforcement is fed by an additional servo drive of a reinforcement-feeding mechanism, through the axis of the plasticizing system (through the center of the axis of the screw), and then through the material-feeding nozzle of the extruder, where it joins together with the polymer at the end of the nozzle with the already deposited layer of the material. The screw in the extruder may be made from a single element or it can be modular, being divided into smaller parts.

It is preferable that the head assembly with the pressing element includes a reinforcement channel for feeding the reinforcement, wherein the reinforcement channel includes a reinforcement-giving end and a reinforcement-receiving end, wherein the reinforcement is fed by the reinforcement-feeding mechanism which is connected to the reinforcement-receiving end.

It is preferable that the reinforcement-giving end of the reinforcement channel is located between the material-feeding nozzle and the pressing element, wherein the reinforcement channel is arranged in the turntable parallel to the longitudinal axis of the material-feeding nozzle.

It is preferable that the material-feeding nozzle includes the reinforcement channel, and the reinforcement-receiving end of the reinforcement channel is led out of the material-feeding nozzle.

It is preferable that the reinforcement-giving end of the reinforcement channel is located in the plane of the edge of an opening of the material-feeding nozzle.

It is preferable that the material-feeding nozzle is mounted rotatably about its longitudinal axis.

It is preferable that the material feeding nozzle is mounted rotatably about an axis that is parallel to its longitudinal axis and that passes through the center of an opening of the reinforcement-giving end of the reinforcement channel.

It is preferable that the reinforcement includes at least one continuous reinforcement fiber and/or a reinforcement mesh which is preferably made of at least one of a carbon fiber, an aramid fiber, a kevlar fiber, a glass fiber, a natural-origin fiber, such as a cellulose fiber, a tube made of teflon, PVC, a metal wire, preferably of steel, copper, aluminum. When the reinforcement includes a reinforcement mesh, the reinforcement mesh, rolled up or folded, is fed through the reinforcement channel, and the opening of the reinforcement-giving end has a shape that facilitates the unrolling or unfolding of the reinforcement mesh.

It is preferable that a pressing element pressure force adjustment system is included. The relative height of the ball in relation to the end of the nozzle is adjustable and it depends on the height of the layer of the applied material as well as the pressure force that the user wants to achieve.

It is preferable that a pressing element temperature adjustment system and a deposited material temperature sensor are included.

### Advantageous Effects of Invention

A particular advantage of the present invention is the ability to adjust the pressure force of the pressing element, by which it is possible to increase the adhesion between the layers and avoid the problem of delamination. Moreover, the shape of the ball and its adjustable deflection provide the ability to apply the material both in the print plane, and onto any surface, both concave and/or convex - this means that the head assembly according to the present invention can be used in devices with more than 3 degrees of freedom.

Moreover, the present invention enables to insert elements of reinforcement of the applied layers with the continuous fiber and/or the mesh, e.g. of carbon or glass, which becomes embedded in the applied layer by the pressing element, improving the mechanical properties of the manufactured workpiece. Thanks to the fact that the pressing element is a ball, it is particularly suitable for inserting the reinforcement, especially when the plastic material does not exhibit adhesiveness to the material from which the reinforcement is made.

The present invention provides an evening function for each applied layer.

The present invention prevents the occurrence of deformation of the applied layer of the plastic material caused by a too slow cooling down of the material - it performs a cooling function for the applied layer of the material. In special cases, the pressing element, thanks to the temperature adjustment, can be used for heating, if the layer cannot cool down fast enough.

The nozzle is displaced in a three-dimensional space through a kinematic system of the machine, in accordance with the programmed head movement path, and simultaneously it dispenses an appropriate amount of the material per a given thickness of the path in the executed layer. Thanks to receiving heat from the applied plastic layer, a beneficial effect is obtained that consists in an increased application rate of subsequent layers. Thanks to the pressure, the adhesiveness of individual layers is improved, and at the same time an evening effect for the applied layers is achieved, even though the ball does not compress the thermal layer evenly. Another surprising beneficial effect is that the appearance of the additively manufactured workpiece is improved. Thanks to the uneven pressure and the shape of the pressing element which simultaneously receives heat, the outer part of the layer has a higher temperature and it cools down slower and deforms less due to the pressure, which yields a better visual effect.

By reinforcing with the continuous reinforcement fiber and the reinforcement mesh, the present invention increases about twice the mechanical strength of the manufactured structure. On the other hand, thanks to reinforcing with the wire or the tube, the present invention enables to increase the functionality of the manufactured workpieces, by way of example, by cooling/heating the workpiece through the tube and enabling to transmit electrical signals using the metal wire or obtain magnetic properties.

### Brief Description of Drawings

FIG. 1 shows a view of a head assembly with a pressing element for an additive manufacturing device.
FIG. 2 shows a view of the head assembly with the pressing element for an additive manufacturing device with an extruder column.
FIG. 3 shows a schematic sectional view of the extruder column with a visible pushing screw.
FIG. 4 shows a view of the head assembly with the pressing element from the side of a material-dispensing nozzle.
FIG. 5 shows another view of the head assembly with the pressing element from the side of the material-dispensing nozzle from a different perspective.
FIG. 6 shows a sectional view of the head assembly with the pressing element and a fragment of the extruder column.
FIG. 7 shows a method of using the head assembly to deposit a reinforcement.
FIG. 8 shows the method of using the head assembly to deposit the reinforcement, wherein the state before the passage of the pressing element (a) and the state during the pressing of the reinforcement by the pressing element (b) are shown.
FIG. 9 shows a schematic of operation of the extruder without a reinforcement channel.
FIG. 10 shows a schematic of operation of the extruder with the reinforcement channel.

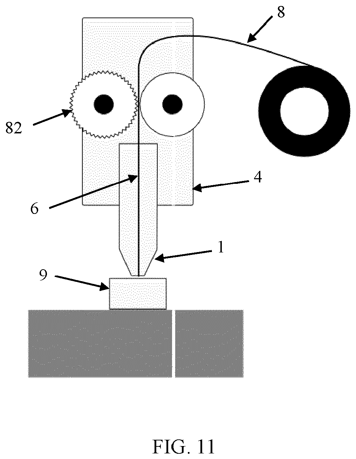

FIG. 11 shows schematically a reinforcement-feeding mechanism.

### Description of Embodiments

### Examples

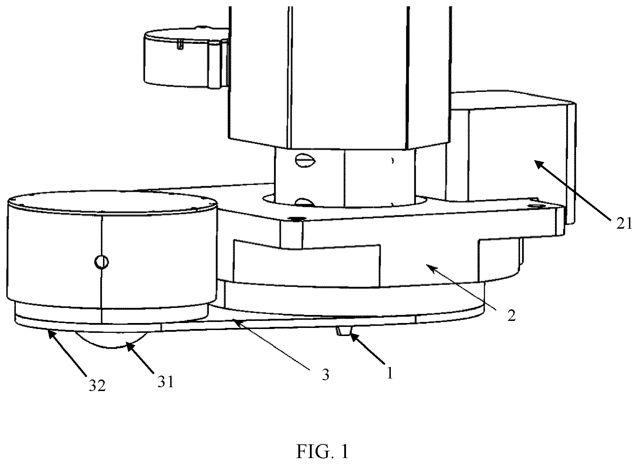

According to the first embodiment illustrated in FIG. 1, a head assembly with a pressing element for an additive manufacturing device includes a material-feeding nozzle 1 which is configured to deposit a material 9 from an extruder 4 onto a working substrate of the additive manufacturing device (not shown), and a turntable 2 mounted movably around the nozzle 1, wherein the rotating pressing element 3 is connected to the turntable 2 which is rotated by means of a servo drive 21. The head assembly with the pressing element also includes a pressing element 3 which is a ball 31, disposed in a ball seat 32 providing free rotation of the ball 31 about any axis of rotation, wherein the ball seat 32 is connected to the turntable 2.

Thanks to this, by appropriately controlling the servo drive 21 of the turntable 2, it is possible to set the pressing element to always follow the center of the applied layer of the material 9. Thanks to the use of the ball 31 as the pressing element, it is possible to press the path of a material of any shape that lies not only in one plane, but also on any concave or convex surface. The ball 31 has dimensions that depend on the particular application, by way of example, the diameter of the ball is 10 mm, in other aspects, the diameter of the ball is 5 mm, 25 mm, 50 mm, 100 mm. It is understood by a person skilled in the art that the remaining structural elements must be matched to the diameter of the ball.

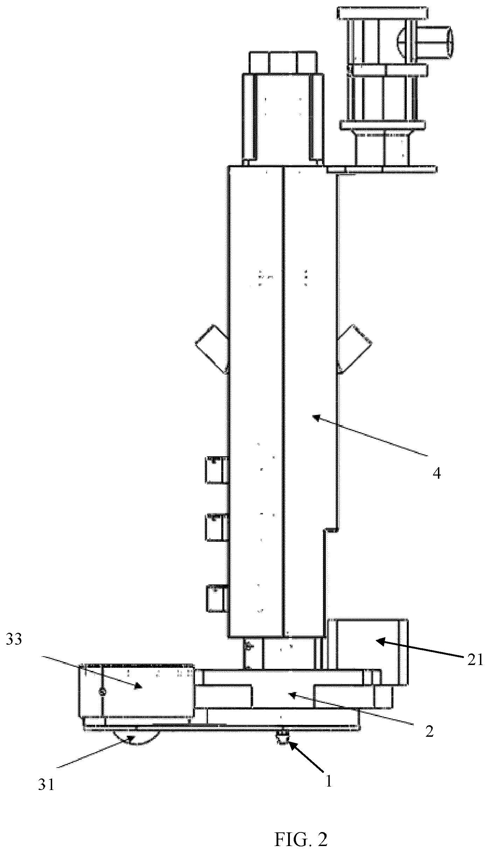

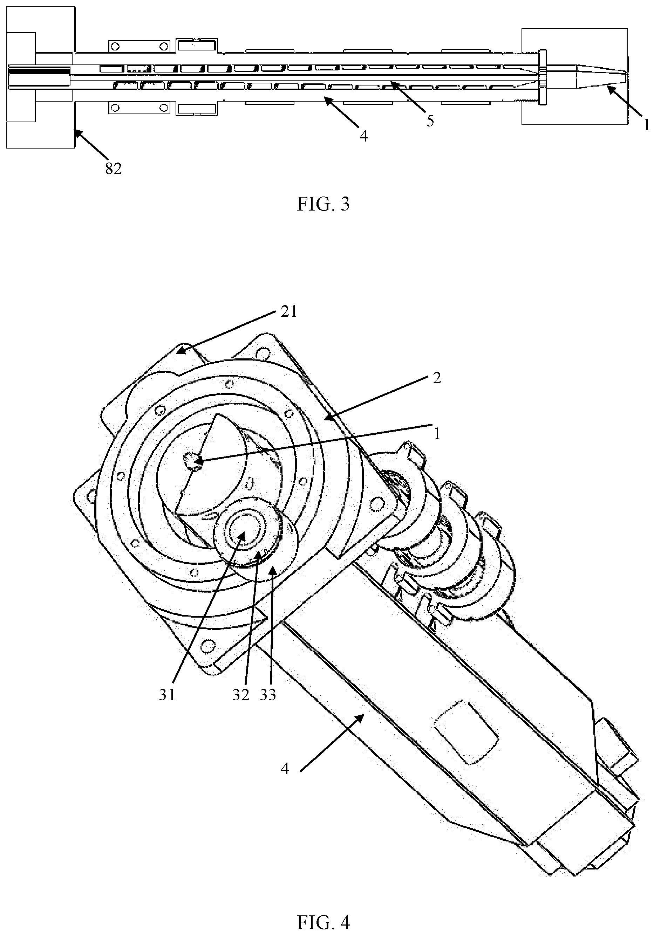

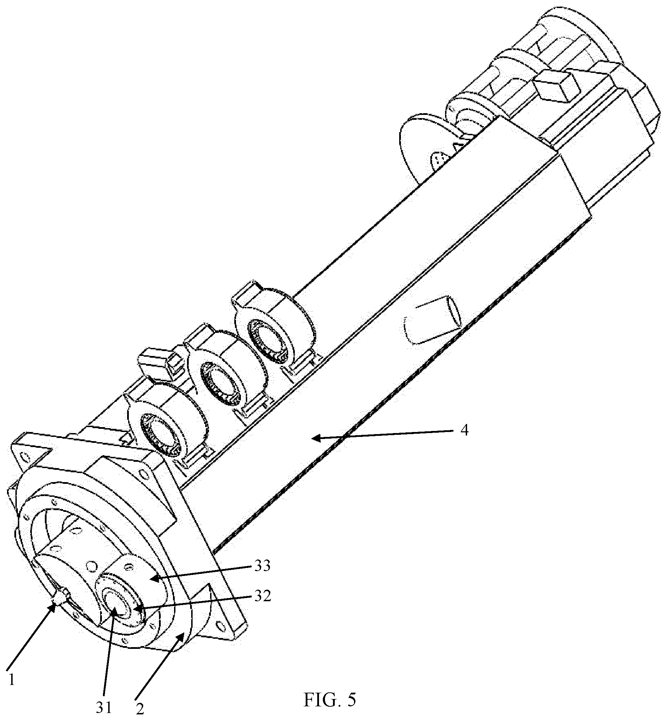

FIG. 2, FIG. 4 and FIG. 5 show, in different views, the head assembly with the pressing element together with the extruder 4 which constitutes an element of the additive manufacturing device which connects to the head assembly. It is apparent to a person skilled in the art that the extruder may be implemented in different ways, which does not affect the scope of the claimed protection. Presentation of this element is only intended to show exemplary relationships, rather than limit the scope of protection. Inside the extruder, a mechanism is located that drives a material being plasticized 91 which, once applied, forms another layer of the material 9. By way of example, it is a worm drive which includes a screw 5 which, by rotating, displaces the plasticized material towards the material-feeding nozzle 1 (FIG. 3, FIG. 6, FIG. 7, FIG. 9, FIG. 10).

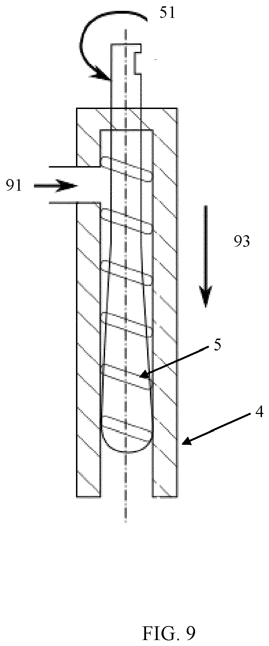

According to an embodiment, the present invention enables processing of a granulate or milling of recycled plastic materials. They may be any thermoplastic materials or composites, such as, e.g., ABS, ASA, PET-G, PLA, PSU, or even PEEK, etc. According to an embodiment, one of the most popular materials, i.e. ABS (acrylonitrile-butadiene-styrene terpolymer), is processed, the ABS granulate 91 (FIG. 9) is delivered into a charging zone of a plasticizing system - an extruder 4 (a screw 5 and a cylinder 41), where, as a result of the rotary movement of the screw 5, the material 91 is delivered into subsequent zones of the extruder 4, where, under the influence of temperature (about 230-240°C), the material is plasticized, passing from the solid state to the semi-liquid state. As a result of the rotary movement of the screw 5, driven by the servo drive 51, the material is delivered into the nozzle 1 which is the outlet of the extruder 4. In this form, the material is applied onto the working substrate, path by path, in accordance with the programmed movement. A computer-based computing system, which implements the CAM functions and controls the entire additive manufacturing device and the head assembly itself, is responsible for controlling the movement. During the movement of the extruder 4, the head is followed very closely by the pressing element 3 in the form of the ball 31; in order to be able to move exactly along the extruded path, the head assembly including the ball 31 can be rotated 360° about the axis of the nozzle 1. The angle of rotation of the turntable 2 (which is identical to the angle of rotation of the ball seat 32) results from the calculations of a control program (the manner in which the ball follows is programmable). The temperature of the ball 31 of the pressing element 3 is, by way of example, 20°C. The ball temperature adjustment range is wide and it depends on the cooling liquid 7 used, and on the requirements of the material used (melting point), as well as the path dimensions and the ball dimensions. Accordingly, the ball 31 cools the applied layer of the material to a temperature lower than the melting point. Thanks to this, when the next layer is applied, the temperature of the previously applied layer is about 160-180°C, and when the next layer is applied, no unwanted deformations occur. After the printing process is completed, the fiber is automatically cut off at the section where the printing ends. The fiber is cut off with a rotary knife just downstream of a feeding knurle 82.

The exemplary relationships between the material used, the path diameter, the ball diameter, the liquid 7 used, and the obtained ball 31 temperatures are set forth in Table 1.

**Table 1**

| No. | Material | Path diameter | Ball diameter | Cooling medium | Ball temperature |
|---|---|---|---|---|---|
| 1. | ABS | 5 mm | 25 mm | Glycol | 25°C |
| 2. | ABS | 10 mm | 50 mm | R404a gas | 20°C |
| 3. | PA12GF | 5 mm | 25 mm | Glycol | 50°C |
| 4. | PET-G | 1 mm | 10 mm | Water | 20°C |

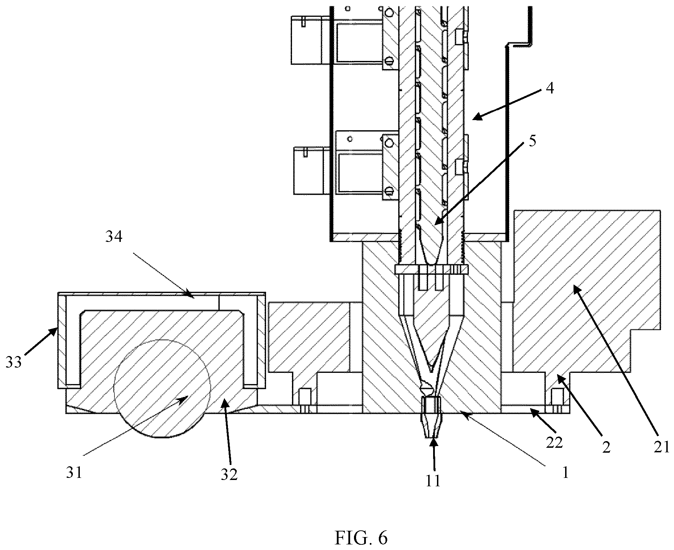

According to an aspect of an embodiment (FIG. 6), the head assembly includes the ball 31 which is made of a material having good heat conduction, by way of example, of a metal. According to further aspects of the embodiment, the ball 31 is made of copper, silver, steel, aluminum, or according to other aspects, of a metal alloy, by way of example, of cast iron, brass, bronze.

According to a further aspect of the embodiment, the ball seat 32 includes a heat-conducting flange 33. The heat-conducting flange 33 is cooled with the liquid 7, wherein this liquid is delivered into a flange chamber 34 (FIG. 6) and received from the flange chamber 34 by conduits 35 which connect the heat-conducting flange 33 and at least one liquid cooler 36.

According to another aspect of the embodiment, the heat-conducting flange 33 is heated with a liquid 71, wherein the liquid is delivered into the flange chamber 34 and received from the flange chamber 34 by conduits 35 which connect the heat-conducting flange 33 and at least one liquid heater 37.

The said liquid 7 cooling or heating the heat-conducting flange 33 is, in aspects of the embodiment, air, water, glycol, or a refrigerant, such as R134a or R404a. It is apparent to a person skilled in the art that other non-listed refrigerants may be used. It is also understood by a person skilled in the art that the use of refrigerants requires the use of suitable compression systems and heat exchangers.

According to a further embodiment, a reinforcement channel 6 is located inside the screw 5 (exactly in its axis) through which, from the beginning of the screw to the outlet of the nozzle, a reinforcement 8 is fed that reinforces the printed workpiece. The reinforcement channel 6 includes a reinforcement-giving end 61 and a reinforcement-receiving end 62, wherein the reinforcement 8 is fed by a reinforcement-feeding mechanism 81 which is connected to the reinforcement-receiving end 62.

According to aspects of this embodiment, the reinforcement 8 includes at least one continuous reinforcement fiber and/or a reinforcement mesh which is preferably made of at least one of a carbon fiber, an aramid fiber, a kevlar fiber, a glass fiber, a natural-origin fiber, such as a cellulose fiber, tubes made of teflon, PVC, a metal wire, by way of example, of steel, copper, aluminum. In an aspect of the embodiment, when an opening of the reinforcement-giving end 61 is lowered, the reinforcement mesh is unfolded thanks to an appropriate shape by the opening 61.

The reinforcement 8 is fed mechanically by means of the knurle 82 and a servo drive 81. The feed rate of the reinforcement 8 is the same as the translational movement speed of the nozzle 1 - in other words, the linear path on which the nozzle 1 travels is the same as the length of the fed reinforcement 8. The fiber may be fed just downstream of the extruded path or together with the extruded material.

According to one aspect of the embodiment, in the head assembly, the reinforcement-giving end 61 of the reinforcement channel 6 is located between the material-feeding nozzle 1 and the pressing element 3, wherein the reinforcement channel 6 is arranged in the turntable 2 parallel to the longitudinal axis of the material-feeding nozzle 1. According to this aspect, the fibers of the reinforcement 8 are fed just downstream of the extruded path, but upstream of the pressing element 3.

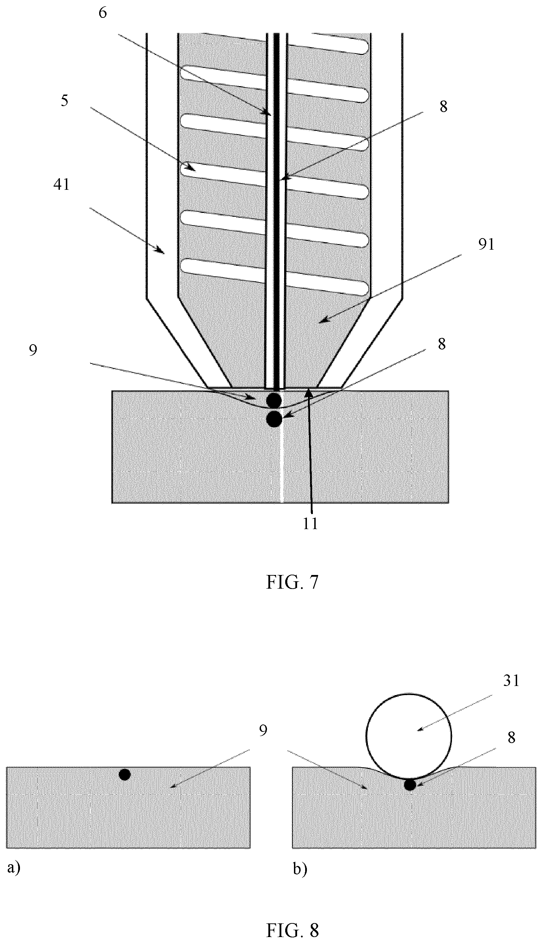

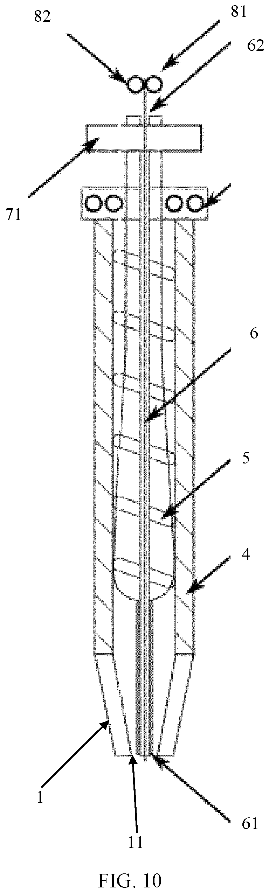

According to a further aspect of this embodiment, in the head assembly, the material-feeding nozzle 1 includes the reinforcement channel 6, and the reinforcement-receiving end 62 of the reinforcement channel 6 is led out of the material-feeding nozzle 1 (FIG. 7, FIG. 10).

The temperature of the fibers of the reinforcement 8 will always be equal to the temperature of the extruded material 9 (the fibers are heated up inside the screw 5 and they reach the same temperature as the screw 5), which increases the adhesion of the reinforcement to the polymer. As shown in FIG. 7 and FIG. 8, first, the polymer (the material 9), and then the reinforcement 8 is fed onto the working substrate, and the extruded path is followed very closely by the pressing element 31 which embeds the reinforcement in the polymer, creating immediately an oblong hollow (a channel of the reinforcement) on the surface of the extruded path that has the shape of a gutter which is a location where the next layer of the material is to be applied. Thanks to adjusting, during operation, the degree of deflection of the seat 32 and/or the flange 33 which includes the pressing element 3, the width and depth of the "gutter" are adjusted. As is known in the background art, once the material 9 is pressed, a slight return deformation thereof occurs.

According to another aspect of the embodiment, the reinforcement-giving end 61 of the reinforcement channel 6 is located in the plane of the edge of the opening 11 of the material-feeding nozzle 1. Alternatively, the reinforcement-giving end 61 of the reinforcement channel 6 is located in the plane of the edge of the input opening of the material-feeding nozzle 1, and thus the reinforcement is added to the material 91 just before it is extruded by the nozzle 1. In another aspect of the embodiment, the length of the reinforcement channel 6 is adjustable, which results in the fiber being fed at the same time as the material (at the bottom of the embedded path) or being fed after the material is applied (closer to the surface of the embedded path).

According to a another aspect of the embodiment, the material-feeding nozzle 1 is mounted rotatably about its longitudinal axis.

According to yet another aspect of the embodiment, the material-feeding nozzle 1 is mounted rotatably about an axis that is parallel to its longitudinal axis and that passes through the center of an opening 63 of the reinforcement-giving end 61 of the reinforcement channel 6.

Moreover, according to the last aspect of this embodiment, through the reinforcement channel 6 delivering the reinforcement 8, other types of continuous materials/carriers, such as conduits, wires, tubes, etc., may be delivered and embedded in the material which can, e.g., additionally cool or heat the printed workpiece (on the basis of water floor heating, in the case that a tube is embedded, or electrically) by passing a cooling or heating medium through the tube embedded in the workpiece. In the case that conduits are embedded, it is possible to transmit electrical signals, and in special cases, to isolate them from the electromagnetic field.

According to an embodiment, the head assembly includes a pressing element 3 pressure force adjustment system 38. The pressure force depends on the material used, the path dimensions (width, thickness of the layer), and the dimensions of the ball and its ability to remove heat.

According to an embodiment, the head assembly includes a pressing element 3 temperature adjustment system 39 and a deposited material temperature sensor 9. This enables to adjust the travel rate of the nozzle 1 depending on the effectiveness of heat removal.

According to an embodiment, the following steps of a manufacturing process that utilizes the spherical pressing element can be distinguished:
a) the pressing element 3 moves on a rotatable rim encircling the materialpressing head, while following the nozzle 1 along the applied path;
b) the pressing element 3 evens the applied layer of the material;
c) the pressing element 3 in the form of the pressure ball 31 is cooled in the flange 33 with an internal cooling or heating circuit depending on the control settings; the pressing element enables to adjust the temperature of the applied layer by adjusting the temperature of the cooling and/or heating medium.
d) the pressing element is additionally adapted to reinforce the layer of the applied material with a continuous reinforcement fiber;
e) the pressing element presses (in an adjustable manner) the layer of the material, increasing the adhesion to the preceding layer (located under the currently applied layer).

### Industrial Applicability

The present invention can be utilized during additive manufacturing in the case of manufacturing by a method that utilizes direct extrusion of plastic material granulates, i.e. in the so-called extruders:
- extrusion of thermoplastic materials;
- extrusion of concrete (additive manufacturing from concrete).

### Reference Signs List

- 1 -: material-feeding nozzle,
- 11 -: nozzle opening,
- 2 -: turntable,
- 21 -: turntable servo drive,
- 3 -: pressing element,
- 31 -: ball,
- 32 -: ball seat 32,
- 33 -: heat-conducting flange,
- 34 -: flange chamber,
- 35 -: conduits,
- 36 -: liquid cooler,
- 37 -: liquid heater,
- 38 -: pressure force adjustment system,
- 39 -: pressing element temperature adjustment system,
- 4 -: extruder (plasticizing system),
- 5 -: screw,
- 51 -: screw rotation direction,
- 6 -: reinforcement channel,
- 61 -: reinforcement-giving end,
- 62 -: reinforcement-receiving end,
- 7 -: cooling and/or heating liquid,
- 8 -: reinforcement,
- 81 -: reinforcement-feeding mechanism,
- 9 -: additively deposited material,
- 91 -: additively deposited material in the plasticization phase,
- 92 -: deposited material temperature sensor,
- 93 -: direction of material travel in the extruder.

## Claims

1. A head assembly with a pressing element for an additive manufacturing device, wherein the head assembly with the pressing element includes
a material-feeding nozzle (1) and
a turntable (2) mounted movably around the nozzle (1), wherein the rotating pressing element (3) is connected to the turntable (2) which is rotated by means of a turntable servo drive (21), wherein
the head assembly with the pressing element is **characterized in that**
the pressing element (3) is a ball (31) arranged in a ball seat (32) providing free rotation of the ball (31) about any axis of rotation, wherein the ball seat (32) is connected to the turntable (2).

2. The head assembly according to claim 1, **characterized in that** the ball (31) is made of a material having good heat conduction, preferably of a metal, more preferably of copper, silver, steel, aluminum, or preferably of a metal alloy, more preferably of cast iron, brass, bronze.

3. The head assembly according to claim 2, **characterized in that** the ball seat (32) includes a heat-conducting flange (33) surrounding the ball.

4. The head assembly according to claim 3, **characterized in that** it includes at least one liquid cooler (36) connected by conduits (35) to a flange chamber (34) in the heat-conducting flange (33).

5. The head assembly according to claim 3, **characterized in that** it includes at least one liquid heater (37) connected by conduits (35) to the flange chamber (34) in the heat-conducting flange (33).

6. The head assembly according to claim 4 or 5, **characterized in that** the liquid (7) cooling and heating, respectively, the heat-conducting flange (33) is preferably air, water, glycol, or a refrigerant.

7. The head assembly according to any one of claims 1-6, **characterized in that** it includes a reinforcement channel (6) for feeding a reinforcement, wherein the reinforcement channel (6) includes a reinforcement-giving end (61) and a reinforcement-receiving end (62), wherein the reinforcement (8) is fed by a reinforcement-feeding mechanism (81) which is connected to the reinforcement-receiving end (62).

8. The head assembly according to claim 7, **characterized in that** the reinforcement-giving end (61) of the reinforcement channel (6) is located between the material-feeding nozzle (1) and the pressing element (3), wherein the reinforcement channel (6) is arranged in the turntable (2) parallel to the longitudinal axis of the material-feeding nozzle (1).

9. The head assembly according to claim 7, **characterized in that** the reinforcement-giving end (61) of the reinforcement channel (6) is located inside the material-feeding nozzle (1), and the reinforcement-receiving end (62) of the reinforcement channel (6) is led out of the material-feeding nozzle (1).

10. The head assembly according to any one of claims 7-9, **characterized in that** the reinforcement-giving end (61) of the reinforcement channel (6) is located in the plane of the edge of an opening (11) of the material-feeding nozzle (1).

11. The head assembly according to any one of claims 1-10, **characterized in that** the material-feeding nozzle (1) is mounted rotatably about its longitudinal axis.

12. The head assembly according to any one of claims 7-9, **characterized in that** the material-feeding nozzle (1) is mounted rotatably about an axis that is parallel to its longitudinal axis and that passes through the center of an opening (63) of the reinforcement-giving end (61) of the reinforcement channel (6).

13. The head assembly according to any one of claims 7-10, **characterized in that** the reinforcement (8) includes at least one continuous reinforcement fiber and/or a reinforcement mesh which is preferably made of at least one of a carbon fiber, an aramid fiber, a kevlar fiber, a glass fiber, a cellulose fiber, tubes made of teflon, PVC, a metal wire, preferably of steel, copper, aluminum.

14. The head assembly according to any one of claims 1-12, **characterized in that** it includes a pressing element (3) pressure adjustment system (38) which includes at least a bolt positioning the ball seat (32) relative to the plane of the edge of the opening (11) of the material-feeding nozzle (1).

15. The head assembly according to any one of claims 1-13, **characterized in that** it includes a pressing element (3) temperature adjustment system (39) and a deposited material temperature sensor (92).

## Patentansprüche

1. Die Kopfbaugruppe mit einem Anpresselement für eine additive Fertigungseinrichtung, wobei die Kopfbaugruppe mit dem Anpresselement umfasst
eine Materialzufuhrdüse (1) und
einen um die Düse (1) beweglich gelagerten Drehtisch (2), wobei das rotierende Anpresselement (3) mit dem Drehtisch (2) verbunden ist, der mittels eines Drehtisch-Servoantriebs (21) gedreht wird, wobei
eine Kopfbaugruppe mit dem Anpresselement ist **dadurch gekennzeichnet, dass**
ein Anpresselement (3) eine Kugel (31) ist, die in einem Kugelsitz (32) angeordnet ist, der eine freie Drehung der Kugel (31) um eine beliebige Drehachse bereitstellt, wobei der Kugelsitz (32) mit dem Drehtisch (2) verbunden ist.

2. Die Kopfbaugruppe nach Anspruch 1, **dadurch gekennzeichnet, dass** die Kugel (31) aus einem gut wärmeleitenden Material, bevorzugt aus einem Metall, weiter bevorzugt aus Kupfer, Silber, Stahl, Aluminium oder bevorzugt aus einer Metalllegierung, weiter bevorzugt aus Gusseisen, Messing, Bronze besteht.

3. Die Kopfbaugruppe nach Anspruch 2, **dadurch gekennzeichnet, dass** der Kugelsitz (32) einen wärmeleitenden Flansch (33) beinhaltet, der die Kugel umgibt.

4. Die Kopfbaugruppe nach Anspruch 3, **dadurch gekennzeichnet, dass** sie mindestens einen Flüssigkeitskühler (36) umfasst, der durch Leitungen (35) mit einer Flanschkammer (34) im wärmeleitenden Flansch (33) verbunden ist.

5. Die Kopfbaugruppe nach Anspruch 3, **dadurch gekennzeichnet, dass** sie mindestens eine Flüssigkeitsheizung (37) umfasst, die durch Leitungen (35) mit der Flanschkammer (34) im wärmeleitenden Flansch (33) verbunden ist.

6. Die Kopfbaugruppe nach Anspruch 4 oder 5, **dadurch gekennzeichnet, dass** die Flüssigkeit (7), die den wärmeleitenden Flansch (33) kühlt bzw. erwärmt, vorzugsweise Luft, Wasser, Glykol oder ein Kältemittel ist.

7. Die Kopfbaugruppe nach einem der Ansprüche 1-6, **dadurch gekennzeichnet, dass** sie einen Verstärkungskanal (6) zum Zuführen einer Verstärkung beinhaltet, wobei der Verstärkungskanal (6) ein verstärkungsgebendes Ende (61) und ein verstärkungsaufnehmendes Ende (62) beinhaltet, wobei die Verstärkung (8) durch einen Verstärkungszufuhrmechanismus (81) zugeführt wird, der mit dem verstärkungsaufnehmenden Ende (62) verbunden ist.

8. Die Kopfbaugruppe nach Anspruch 7, **dadurch gekennzeichnet, dass** sich das verstärkungsgebende Ende (61) des Verstärkungskanals (6) zwischen der Materialzufuhrdüse (1) und dem Anpresselement (3) befindet, wobei der Verstärkungskanal (6) parallel zu der Längsachse der Materialzufuhrdüse (1) in dem Drehtisch (2) angeordnet ist.

9. Die Kopfbaugruppe nach Anspruch 7, **dadurch gekennzeichnet, dass** das verstärkungsgebende Ende (61) des Verstärkungskanals (6) innerhalb der Materialzufuhrdüse (1) liegt und das verstärkungsaufnehmende Ende (62) des Verstärkungskanals (6) aus der Materialzufuhrdüse (1) herausgeführt ist.

10. Die Kopfbaugruppe nach einem der Ansprüche 7-9, **dadurch gekennzeichnet, dass** sich das verstärkungsgebende Ende (61) des Verstärkungskanals (6) in der Ebene des Rands einer Öffnung (11) der Materialzufuhrdüse (1) befindet.

11. Die Kopfbaugruppe nach einem der Ansprüche 1-10, **dadurch gekennzeichnet, dass** die Materialzufuhrdüse (1) drehbar um ihre Längsachse montiert ist.

12. Die Kopfbaugruppe nach einem der Ansprüche 7-9, **dadurch gekennzeichnet, dass** die Materialzufuhrdüse (1) um eine zu ihrer Längsachse parallele Achse drehbar gelagert ist, die durch die Mitte einer Öffnung (63) des verstärkungsgebenden Endes (61) des Verstärkungskanals (6) verläuft.

13. Die Kopfbaugruppe nach einem der Ansprüche 7-10, **dadurch gekennzeichnet, dass** die Verstärkung (8) mindestens eine durchgehende Verstärkungsfaser und/oder ein Verstärkungsnetz beinhaltet, das vorzugsweise aus mindestens einer von einer Kohlenstofffaser, einer Aramidfaser, einer Kevlarfaser, einer Glasfaser, einer Cellulosefaser, Schläuchen aus Teflon, PVC, einem Metalldraht, vorzugsweise aus Stahl, Kupfer, Aluminium, besteht.

14. Die Kopfbaugruppe nach einem der Ansprüche 1-12, **dadurch gekennzeichnet, dass** sie ein Druckeinstellsystem (38) des Anpresselements (3) beinhaltet, das mindestens einen Bolzen beinhaltet, der den Kugelsitz (32) relativ zu der Ebene des Rands der Öffnung (11) der Materialzufuhrdüse (1) positioniert.

15. Die Kopfbaugruppe nach einem der Ansprüche 1-13, **dadurch gekennzeichnet, dass** sie ein Temperatureinstellsystem (39) des Anpresselements (3) und einen Temperatursensor (92) für abgeschiedenes Material umfasst.

## Revendications

1. Ensemble de tête avec un élément presseur pour un dispositif de fabrication additive, dans lequel l'ensemble de tête avec l' élément presseur comprend :
une buse d'alimentation en matière (1) et
une table tournante (2) montée de manière amovible autour de la buse (1), dans laquelle l'élément presseur rotatif (3) est relié à la table tournante (2) qui est mise en rotation par un servomoteur de la table tournante (21), dans lequel
l'ensemble de tête avec l' élément presseur est **caractérisé en ce que**
l' élément presseur (3) est une bille (31) agencée dans une siège de bille (32) pour assurer la rotation autour de n'importe quel axis de rotation, dans lequel la siège de bille (32) est reliée à la table tournante (2).

2. Ensemble de tête selon la revendication 1, **caractérisé en ce que** la bille (31) est fait du matériau présentant la bonne conduction thermique, avantageusement du métal, plus avantageusement du cuivre, d'argent, d'acier, d'aluminium, ou avantageusement d'alliage métallique, plus avantageusement de fonte, du laiton, du bronze.

3. Ensemble de tête selon la revendication 2, **caractérisé en ce que** la siège de bille (32) comprend une bride conductrice de la chaleur (33) entourant la bille.

4. Ensemble de tête selon la revendication 3, **caractérisé en ce qu'**il comprend au moins un refroidisseur de liquide (36) relié par des conduites (35) à une chambre de bride (34) au sein de la bride conductrice de la chaleur (33).

5. Ensemble de tête selon la revendication 3, **caractérisé en ce qu'**il comprend au moins un chauffe-liquide (37) relié par des conduites (35) à la chambre de bride (34) au sein de la bride conductrice de la chaleur (33).

6. Ensemble de tête selon la revendication 4 ou 5, **caractérisé en ce que** le refroidissement et le réchauffement du liquide (7), respectivement, la bride conductrice de la chaleur (33) est avantageusement d'air, d'eau, du glycol, ou d'un frigorigène.

7. Ensemble de tête selon l'une quelconque des revendications 1-6, **caractérisé en ce qu'**il comprend un canal du ferraillage (6) pour alimenter d'un ferraillage, dans lequel le canal du ferraillage (6) comprend une extrémité donneuse du ferraillage (61) et une extrémité réceptrice du ferraillage (62), dans lequel le ferraillage (8) est alimenté par un mécanisme d'alimentation en ferraillage (81) qui est relié à l'extrémité réceptrice du ferraillage (62).

8. Ensemble de tête selon la revendication 7, **caractérisé en ce que** l'extrémité donneuse du ferraillage (61) du canal du ferraillage (6) est disposée entre la buse d'alimentation en matière (1) et l'élément presseur (3), dans lequel le canal du ferraillage (6) est agencé dans la table tournante (2) parallèlement au axis longitudinal de la buse d'alimentation en matière (1).

9. Ensemble de tête selon la revendication 7, **caractérisé en ce que** l'extrémité donneuse du ferraillage (61) du canal du ferraillage (6) est disposée au sein de la buse d'alimentation en matière (1), et l'extrémité réceptrice du ferraillage (62) du canal du ferraillage (6) est conduite hors de la buse d'alimentation en matière (1).

10. Ensemble de tête selon l'une quelconque des revendications 7-9, **caractérisé en ce que** l'extrémité donneuse du ferraillage (61) du canal du ferraillage (6) est disposée dans le plan du bord d'une ouverture (11) de la buse d'alimentation en matière (1).

11. Ensemble de tête selon l'une quelconque des revendications 1-10, **caractérisé en ce que** la buse d'alimentation en matière (1) est montée de manière rotative autour de son axis longitudinal.

12. Ensemble de tête selon l'une quelconque des revendications 7-9, **caractérisé en ce que** la buse d'alimentation en matière (1) est montée de manière rotative autour d'un axis qui est parallèle à son axis longitudinal et qui passe à travers le centre d'une ouverture (63) de l'extrémité donneuse du ferraillage (61) du canal du ferraillage (6).

13. Ensemble de tête selon l'une quelconque des revendications 7-10, **caractérisé en ce que** le ferraillage (8) comprend au moins une fibre du ferraillage continue et/ou un treillis du ferraillage qui est avantageusement fait d'au moins une parmi une fibre du carbone, une fibre d'aramide, une fibre de kevlar, une fibre de verre, une fibre de cellulose, des tubes fait du téflon, du PVC, du fil de métal, avantageusement d'acier, du cuivre, d'aluminium.

14. Ensemble de tête selon l'une quelconque des revendications 1-12, **caractérisé en ce qu'**il comprend l'élément presseur (3) le système d'ajustement de pression (38) qui comprend au moins un boulon de positionnement de siège de bille (32) par rapport au plan du bord de la ouverture (11) de la buse d'alimentation en matière (1).

15. Ensemble de tête selon l'une quelconque des revendications 1-13, **caractérisé en ce qu'**il comprend l'élément presseur (3) le système d'ajustement de température (39) et un capteur de température du matériau déposé (92).
